Europäisches Patentamt

European Patent Office

Office européen des brevets

(11) Veröffentlichungsnummer: **0 424 533 A1**

(12) **EUROPÄISCHE PATENTANMELDUNG**
**veröffentlicht nach Art. 158 Abs. 3**
**EPÜ**

(21) Anmeldenummer: 89909907.1

(22) Anmeldetag: 28.04.89

(86) Internationale Anmeldenummer:
**PCT/SU89/00114**

(87) Internationale Veröffentlichungsnummer:
**WO 90/13770 (15.11.90 90/26)**

(51) Int. Cl.5: **F17C 3/00, F17C 13/00**

(43) Veröffentlichungstag der Anmeldung:
**02.05.91 Patentblatt 91/18**

(84) Benannte Vertragsstaaten:
**DE FR GB NL**

(71) Anmelder: **INNOVATSIONNY TSENTR**
**"INTERLAB"**
**ul. Profsojuznaya, 84/32**
**Moscow, 117810(SU)**

(72) Erfinder: **MOISEEV, Sergei Borisovich**
**Leninsky pr., 52-281**
**Moscow, 117333(SU)**

(74) Vertreter: **Finck, Dieter et al**
**Patentanwälte v. Füner, Ebbinghaus, Finck**
**Mariahilfplatz 2 & 3**
**W-8000 München 90(DE)**

(54) **WÄRMEISOLIERUNGSVORRICHTUNG FÜR TIEFTEMPERATURGEGENSTÄNDE UND HERSTELLUNGSMETHODE FÜR EINE PACKUNG AUS GEKÜHLTEN STRAHLUNGSSCHIRMEN FÜR EINE SOLCHE VORRICHTUNG.**

(57) Die Erfindung bezieht sich auf die kryogene Technik.

Die Wärmeisolierende Einrichtung von kryogenen Objekten stellt ein Paket von gekühlten Strahlungsschirmen (2) dar, die koaxial zum kryogenen Objekt - einem Gefäß (4) - liegen und mit Wärmeaustauschkanälen (6) versehen sind, die mittels Verbindungsrohren (7) in Verbindung stehen. Das Paket der Strahlungsschirme (2) ist insgesamt als ein Ganzes ausgeführt, wobei die Kanäle (6) im Körper der Schirme (2) angeordnet sind. Das Paket der Schirme (2) wird aus einem mehrlagigen Band hergestellt, auf welches das "Muster" der Abwicklung des gesamten Paketes der Schirme (2) aufgetragen ist. Zwischen den Bandlagen stellt man ein System von Kanälen (6) und Verbindungsrohren (7) gemäß dem "Muster" her. Danach schneidet man eine Abwicklung aus und formiert aus derselben das Paket, wobei man die Schirme (2) koaxial, die Verbindungsrohre (7) aber zwischen denselben anordnet.

Die wärmeisolierende Einrichtung ist vorwiegend zum Einsatz in zum Speichern von kryogenen Flüssigkeiten bestimmten Behältern bestimmt.

FIG. 8

# WÄRMEISOLIERENDE EINRICHTUNG VON KRYOGENEN OBJEKTEN UND VERFAHREN ZUR HERSTELLUNG EINES PAKETES CEKÜHLTER STRAHLUNGSSCHIRME FÜR DIESE EINRICHTUNG

## Technisches Gebiet

Die Erfindung bezieht sich auf die Kryotechnik und betrifft insbesondere wärmeisolierende Einrichtungen von kryogenen Objekten - Kryostaten, Dewar-Gefäßen, gekühlten Geräten sowie ein Verfahren zur Herstellung eines Paketes von Strahlungsschirmen für diese Einrichtung.

## Zugrundeliegender Stand der Technik

Es ist eine wärmeisolierende Einrichtung von kryogenen Objekten bekannt, die in Form eines Paketes von passiven Schirmen ausgeführt ist, die in einer Reihe hintereinander im Ausbreitungswege der Wärmestrahlung zum kryogenen Objekt angeordnet sind (DE, B, Nr. 2361360). In dieser Einrichtung sind die Schirme in Form von koaxialen Zylindern ausgeführt, die außerhalb des Gefäßes mit der kryogenen Flüssigkeit angebracht und am Einfüllhals des Gefäßes befestigt sind. Die Abkühlung der Schirme geschieht mit 'kaltem" gas, das durch den Gefäßhals von der kryogenen Flüssigkeit abgeführt wird.

Jedoch ist die Effektivität der Abkühlung in diesen Einrichtungen recht gering,weil jeder passive Schirm den Wärmezufluß nur um das Doppelte reduziert, während die Wärmeaustauschfläche der Einrichtung von der Innenfläche des Einfüllhalses des Gefäßes begrenzt ist.

Bekannt ist ferner eine wärmeisolierende Einrichtung von kryogenen Objekten, die einen gekühlten Strahlungsschirm darstellt, der mit Wärmeaustauschkanälen zum Strömen eines Kühlmittels versehen ist, die zwischen den Schirmlagen verlaufen (US, A, Nr. 4492088). In dieser Einrichtung ist der Wärmeaustausch zwischen dem Schirm und dem "kalten" Gas verstärkt, weil das letztere nicht durch den Hals, sondern über die zwischen den Schirmlagen vorhandenen Wärmeaustauschkanäle ausgelassen wird. Allerdings ist die durch die Einrichtung erreichbare Abkühlungseffektivität ebenfalls gering, weil der Schirm als eine einzelne Hülle ausgebildet ist und das Anlöten eines Ein- und eines Ausgangsrohres voraussetzt.

Bekannt ist schließlich eine wärmeisolierende Einrichtung von kryogenen Objekten, die als Paket aus sechs gekühlten Strahlungsschirmen ausgeführt ist, welche die Form von Zylindern mit ebenen Strinflächen haben und koaxial einer nach dem anderen im Ausbreitungswege der Wärmestrahlung liegen, wobei jeder von ihnen mit Wärmeaustauschkanälen zum Durchfließen eines Kühlmittels ausgestattet ist, die aufeinanderfolgend von einem Schirm zum anderen mittels Verbindungsrohren in Verbindung stehen (SU, A, Nr. 1180640). Die Wärmeaustauschkanäle sind in der bekannten Einrichtung in Form von abgeplatteten Spiralrohren ausgebildet, die an die Stirnfläche eines jeden Schirmes angelötet sind. Die Wärmeaustauschkanäle stehen über Verbindungsrohre miteinander in Verbindung, die mit den Enden der Spiralrohre ebenfalls verlötet sind. Die kalten Dämpfe des Kryomittels - dem flüssigen Helium (Kältemittel) - gelangen aus dem Heliumgefäß in das System der Wärmeaustauschkanäle und kühlen die Strahlungsschirme ab. Vorteilhaft bei dieser Einrichtung ist die rationelle Nutzung der Enthalpie des vom Kryomittel-dem Helium - abgehenden Dampfes, die vorhandene Abhängigkeit zwischen der Wärmebelastung des Kryomittels und der Effektivität der Wärmeisolierung. Je höher die Belastung ist, umso intensiver verdampft das Helium und umso stärker ist die Abkühlung der Strahlungsschirme, was zur Reduzierung der Verdampfungsintensität von Helium führt. Der Wärmekontakt eines jeden der Strahlungsschirme mit den konstruktiven Verbindungselementen zwischen dem Gehäuse und dem Gefäß setzt die durch die Wärmeleitung bedingten Wärmezuflüsse beträchtlich herab.

Zugleich ist aber der Wärmeaustausch zwischen dem in den Kanälen fließenden Kältemittel und den Oberflächen der Strahlungsschirme deswegen nicht effektiv genug, weil das Kältemittel zunächst die eigentlichen Kanäle, dann die Lotschicht und erst danach die Oberflächen der Strahlungsschirme abkühlt, wodurch ein Wärmewiderstand erzeugt wird. Der Rohrschlangenwärmeaustauscher, der aus einem Rohr mit konstanter Durchgangsquerschnittsfläche besteht, ist hinsichtlich seiner Hydraulik und Wärmeübertragung deswegen nicht optimal, weil die Vergrößerung der Wärmeaustauscherlänge zwecks Vergrößerung der gekühlten Oberfläche der Strahlungsschirme eine Steigerung des hydraulischen Widerstandes des im Rohr fließenden Kryomittelstromes zur Folge hat.

Dabei führt der begrenzte Flächeninhalt der gekühlten Stirnflächen der Schirme zur Erwärmung des nichtgekühlten Teiles der Schirme bzw. zur erzwungenen Anwendung von kostspieligem und schwerem Kupfer als Strahlungsschirmwerkstoff. Die Vergrößerung der Rohrdurchgangsquerschnittsfläche hat eine Zunahme von Wärmezuflüssen zum Heliumgefäß aufgrund der Wärmeleitung im Rohr zur Folge. Andererseits ändern sich die Kältemittelparameter während des Fließens im System der Wärmeaustauschkanäle. Während der Erwärmung des Kältemittels nimmt das spezifische Gasvolumen nahezu proportional zur Gastemperatur zu. Wenn also die Querschnittsfläche des Rohrs unter Beachtung des zulässigen hydraulischen Widerstandes am warmen Rohrende gewählt wird, so wird das kalte Rohrende eine vergrößerte Querschnittsfläche besitzen, was ebenfalls zur Zunahme von Wärmezuflüssen zum Heliumgefäß aufgrund der im Rohr vorhandenen Wärmeleitung führt.

Das Verfahren zur Herstellung der bekannten wärmeisolierendenEinrichtung für kryogene Objekte besteht darin, daß man Halbzeuge der Paketschirme durch deren Ausschneiden aus Blechmaterial herstellt , sie dann mit Wärmeaustauschkanälen durch Anlöten eines abgeplatteten Rohres an die Oberfläche dersellen versieht, welches Rohr entlang einer Spirale an dem jeweiligen Teil der Oberfläche der Strahlungsschirmhalbzeuge angebracht wird, und die Kanäle sämtlicher Halbzeuge aufeinanderfolgend verbindet, indem an die Kanalenden der benachbarten Halbzeuge entsprechende Verbindungsrohe angelötet werden, wonach man aus den erzeugten Strahlungsschirmen ein Paket formiert, indem sie ungefähr parallel zueinander (koaxial) angeordnet und die Verbindungsrohre in den Zwischenräumen zwischen den Schirmen installiert werden. Das beschriebene Verfahren kennzeichnet sich durch technologische Kompliziertheit und erfordert die Ausführung einer Vielzahl von handgelöteten Verbindungen. Darüber hinaus verunreinigt das Löten die Schirmoberfläche, bewirkt die Entstehung von Leck bei Temperaturverformungen und "gast" im Vakuum.

Offenbarung der Erfindung

Der Erfindung liegt die Aufgabe zugrunde, eine wärmeisolierende Einrichtung für kryogene Objekte mit gekühlten Strahlungsschirmen einer solchen Konstruktion zu schaffen, die einen unmittelbaren Kontakt des Kältemittels mit dem Schirmwerkstoff auf der gesamten Schirmoberfläche gewährleisten und auf Lötverbindungen zwischen den Kanälen und den Verbindungsrohren zu verzichten erlauben würde, sowie ein solches Verfahren zur Herstellung dieser wärmeisolierenden Einrichtung zu entwikkeln, das technologisch einfach wäre und die Automatisierung des Prozesses ermöglichte.

Die gestellte Aufgabe wird dadurch gelöst, daß in der wärmeisolierenden Einrichtung von kryogenen Objekten, die in Form mindestens eines Paketes von gekühlten Strahlungsschirmen ausgeführt ist, die nach einander im Ausbreitungswege der Wärmestrahlung zum kryogenen Objekt angeordnet sind und von denen jeder mit Kanälen zum Durchfließen des Kältemittels versehen ist, die von einem Schirm zum anderen mittels Verbindungsrohren aufeinanderfolgend in Verbindung gesetzt sind, erfindungsgemäß jedes Strahlungsschirmpaket aus einem einteiligen mehrlagigen Band ausgeführt ist, das jeweilige Hauptabschnitte gemäß der Anzahl der Schirme im Paket mit einem innerhalb deren Fläche verzweigten Netz durchgehender Kanäle zwischen den Bandlagen sowie zwischen den Hauptabschnitten liegende Zwischenabschnitte aufweist, die mindestens je einen Kanal besitzen, der die Funktion des Verbindungsrohres erfüllt.

Zweckmäßigerweise sind die Verbindungsrohre mit einem Durchgangsquerschnittsfläche veränderlicher Größe ausgeführt, die proportional zum Ansteigen der Kältemitteltemperatur zunimmt.

Die gestellte Aufgabe wird auch dadurch gelöst, daß im Verfahren zur Herstellung eines Paketes von gekühlten Strahlungsschirmen für die wärmeisolierende Einrichtung von kryogenen Objekten, das darin besteht, daß man Halbzeuge von Paketschirmen hergestellt, die Schirme mit Wärmeaustauschkanälen versieht, indem sie aufeinanderfolgend von einem Halbzeug zum anderen mittels Verbindungsrohren in Verbindung gesetzt werden, wonach man aus den erzeugten Schirmen ein Paket formiert, indem die Schirme ungefähr parallel zueinander angeordnet und die Verbindungsrohre in den Zwischenräumen zwischen den Schirmen installiert werden, erfindungsgemäßman als Werkstoff für die Schirmpakete ein mehrlagiges Band verwendet, zwischen dessen Lagen die Kanäle angeordnet sind, aus dem Band die Abwicklung des gesamten Paketes ausschneidet, die gleichzeitig die Halbzeuge sämtlicher Schirme mit den Kanälen und den Verbindungsrohren enthält, und danach aus der genannten Abwicklung ein Paket formiert, wobei die Kanäle im Band innerhalb der Abwicklung auf der gesamten Fläche derselben gebildet werden.

In der gemäß der vorliegenden Erfindung ausgeführten wärmeisolierenden Einrichtung von kryogenen Objekten ist ein unmittelbarer Wärmekontakt zwischen dem Kältemittel und dem Schirmwerkstoff bei vollends beseitigten Lötverbindungen gewährleistet, was es erlaubt, die Effektivität der Ausnutzung der Schirmwerkstoffe beträchtlich zu erhöhen und die Werkstoffe mit einer hohen Wärmeleitzahl wie Kupfer durch leichtere und billigere wie beispielsweise Aluminiumlegierungen zu ersetzen.

Das erfindungsgemäße Verfahren zur Herstellung eines Paketes von Strahlungsschirmen für die wärmeisolierende Einrichtung kryogener Objekte gemäß der Erfindung gestattet es, die Operation des Ausschneidens der Abwicklung des Strahlungsschirmpaketes gleichzeitig mit den Wärmeaustauschkanälen und den Verbindungsrohren sowie die Operation der Montage der Schirme zu einem Paket zu automatisisren und somit die Arbeitsleistung zu erhöhen, wobei das Verfahren in technologischer Hinsicht einfach ist.

Kurze Beschreibung der Zeichnungen

Im folgenden wird die Erfindung in der Beschreibung konkreter Ausführungsbeispiele derselben anhand beiliegender Zeichnungen erläutert, in denen es zeigt:

Fig. 1 ein schematischer Darstellung einen zylindrischen Behälter zum Speichern von kryogenen Flüssigkeiten mit einer wärmeisolierenden Einrichtung, gemäß der Erfindung,im Längsschnitt;

Fig. 2 einen Schnitt nach Linie II-II der Fig. 1;

Fig. 3 einen kugelförmigen Behälter zum Speichern von kryogenen Flüssigkeiten mit einer wärmeisolierenden Einrichtung, gemäß der Erfindung, mit teilweisen Ausbrüchen;

Fig. 4 eine Draufsicht von Fig. 3;

Fig. 5 eine mehrlagige Struktur mit an derselben angebrachten Konturen der Schirmpaketabwicklung mit Verbindungsrohren und Kanälen;

Fig. 6 die Abwicklung des Schirmpaketes für das zylindrische Gefäß zum Speichern von kryogenen Flüssigkeiten, das in Fig. 1, 2 dargestellt ist;

Fig. 7 die Abwicklung des Schirmpaketes für das kugelförmige Gefäß zum Speichern von kryogenen Flüssigkeiten, das in Fig. 3, 4 dargestellt ist;

Fig. 8 ein Schirmpaket, dessen Abwicklung in Fig. 6 abgebildet ist, während der Montage der wärmeisolierenden Einrichtung, in der Isometrie;

Fig. 9 eine Draufsicht des in Fig. 8 abgebildeten Schirmpaketes;

Fig. 10 einen Schnitt nach Linie X - X der Fig. 8;

Fig. 11 die Abwicklung des Paketes von gekühlten Strahlungsschirmen gemäß der Erfindung für den Niedertemperaturteil eines Kryorefrigerators, welches Paket gleichzeitig die Funktion einer Wärmeaustauscheinheit desselben Refrigerators erfüllt;

Fig. 12 einen Schnitt nach Linie XII - XII der Fig. 11;

Fig. 13 einen Schnitt nach Linie XIII-XIII der Fig. 11.

Beste Ausführungsformen der Erfindung

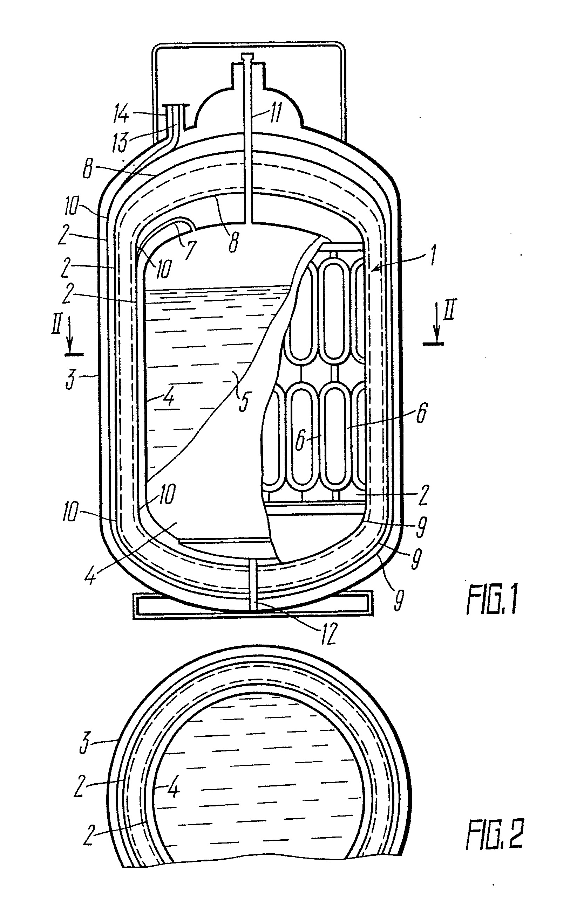

In Fig. 1 und 2 ist ein zylindrischer Behälter zum Speichern von kryogenen Flüssigkeiten dargestellt, der mit einer wärmeisolierenden Einrichtung 1 ausgestattet ist, welche in Form eines Paketes von gekühlten Strahlungsschirmen 2 ausgeführt ist, die nacheinander im Ausbreitungswege der Wärmestrahlung vom Gehäuse 3 des Behälters zu einem Gefäß 4 mit kryogener Flüssigkeit 5 angeordnet sind. Jeder der gekühlten Strahlungsschirme 2 ist mit Kanälen 6 zum Durchfließen eines Kältemittels versehen, im vorliegenden Fall der Dämpfe der kryogenen Flüssigkeit 5. Die Kanäle 6 sind von einem Schirm 2 zum anderen Schirm 2 mittels Verbindungsrohren 7 aufeinanderfolgend verbunden. Sämtliche Schirme 2 des Paketes der gekühlten Strahlungsschirme, die Kanäle 6 und die Verbindungsrohre 7 sind als einheitliches Ganzes aus einem einteiligen mehrlagigen (hier zweilagigen) Band ausgeführt, das jeweilige Hauptabschnitte gemäß der Zahl der Schirme 2 im Paket mit einem auf deren Fläche verzweigten Netz von Kanälen 6 zwischen den Bandlagen sowie zwischen den Hauptabschnitten liegenden Zwischenabschnitte aufweist, die je einen Kanal besitzen, der die Funktion des Verbindungsrohres 7 erfüllt. Die Verbindungsrohre 7 weisen eine Durchgangsquerschnittsfläche veränderlicher Größe auf, die proportional zum Ansteigen der Kältemitteltemperatur zunimmt. Jeder der Schirme 2 hat die Form eines Zylinders, wobei die Zylinder koaxial angeordnet sind. Die Verbindungsrohre 7 sind in den Zwischenräumen zwischen den Schirmen 2 untergebracht. Jeder der gekühlten Strahlungsschirme 2 besitzt jeweils einen unteren und einen oberen Boden 8 und 9, die die Funktion von nichtgekühlten Schirmen erfüllen, wobei eine Verbindung 10 der zylindrischen Teile mit den Böden 8 und 9 einen guten Wärmekontakt zwischen ihnen gewährleistet. Zur Erhöhung der Effektivität der wärmeisolierenden Einrichtung kann auf jeden der Schirme 2 eine mehrlagige Wärmeisolation aufgetragen sein, beispielsweise eine Schirmvakuumisolation (in den Zeichnungenbedingt nicht gezeigt). Das Gefäß 4 ist am Gehäuse 3 mittels eines Einfüllhalses 11 und einer Stütze 12 befestigt. Das Verbindungsrohr 7 des letzten Innenschirmes 2 ist mit dem Gefäß 4 das Verbindungsrohr 13 des letzten Außenschirmes 2 aber mit einem Austrittsstutzen 14 verbunden.

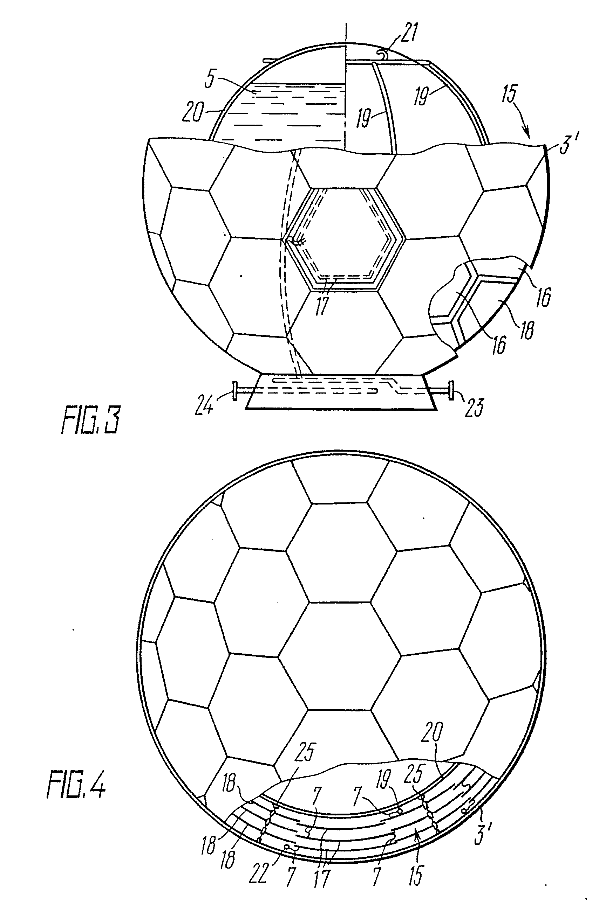

In Fig. 3, 4 ist eine Ausführungsform eines kugelförmigen Behälters zum Speichern von kryogenen Flüssigkeiten gezeigt, bei dem die wärmeisolierende Einrichtung 15 sphärisch ausgebildet ist und eine Vielzahl von Paketan 16 gekühlter Strahlungsschirme 17 von sechseckiger Form enthält, die mit einer Vielzahl von nichtgekühlten (passiven) Strahlungsschirmen 18 der gleichen Form im Wechsel liegen. Die Austrittsverbindungsrohre sämtlicher gekühlten Innenschirme 17 sind an ein inneres Leitungsnetz 19 angeschlossen, das mit dem oberen Teil eines kugelförmigen Gefäßes 20 mittels eines Stutzens 21 in Verbindung steht. Die Verbindungsrohre 7 sämtlicher gekühlten Außenschirme 17 sind mit einem äußeren Leitungsnetz 22 verbunden, das seinerseits mit einem Außenstutzen 23 in Verbindung steht. In jedem der Pakete 16 sind die Schirme 17, die Verbindungsrohre 7 und die Wärmeaustauschkanäle als eiheitliches Ganzes ausgeführt. Für die Durchführung der Operationen des Einfüllens und Ableitens des Kryomittels ist ein Stutzen 24 vorgesehen. Das Gefäß 20 ist am Gehäuse 3 mittels Verspannungen 25 befestigt, die durch die nichtgekühlten Schirme 18 hindurchgehen.

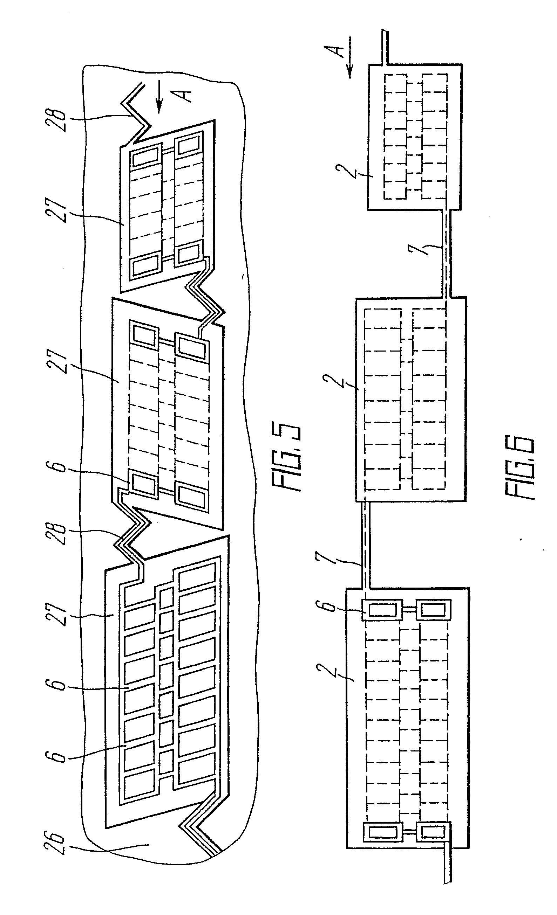

Das Verfahren zur Herstellung eines Paketes gekühlter Strahlungsschirme besteht darin, daß man Halbzeuge von Paketschirmen herstellt, die Schirme mit Wärmeauschkanälen versieht, indem sie von einem Halbzeug zum anderen mittels Verbindungsrohren aufeinanderfolgend in Verbindung gesetzt werden, und aus den hergestellten Schirmen ein Paket formiert, indem die Schirme in einer Reihe ungefähr parallel zueinander angeordnet und die Verbindungsrohre in den Zwischenräumen zwischen den Kanälen installiert werden. Als Werkstoff für Schirmpakete verwendet man ein mehrlagiges, im vorliegenden Beispiel ein zweilagiges Band 26 (Fig. 5), zwischen dessen Lagen Kanäle 6 gelegen sind. Die Kanäle 6 werden durch Auftragen eines "Musters" auf eine der Werkstofflagen des Bandes 26 erzeugt. Das "Muster" wird mir einer Farbe aufgetragen, die die Vereinigung einzelner Strukturlagen bei deren Zusammenheften verhindert, wonach die Lagen miteinander verschweißt werden und dann die Aufquellung der Kanäle durch Einpressen von Gas bzw. Flüssigkeit in die gemäß dem "Muster" nichtverschweißten Abschnitte zwischen den Lagen erfolgt.

Das Kanal "muster" wird auf eine solche Weise aufgetragen, daß die Kanäle 6 die gesamte Fläche der Hauptabschnitte 27 überziehen, die gemäß der Zahl der Schirme 2 ausgeführt sind, wobei diese Kanäle 6 in den Zwischenabschnitten mindestens einzeln liegen sollen, einen guten Wärmeaustausch des Kältemittels mit der Schirmoberfläche gewährleisten und die Wärme von der gesamten Oberfläche desselben geichmäßig ableiten. Die Durchgangsquerschnittsfläche der Kanäle 6 auf der Oberfläche der Schirme wird so gewählt, daß der hydraulische Widerstand gegen die Bewegung des fließenden Kältemittelstroms maximal reduziert und die Wärmeleitung durch die Verbindungsrohre 7 zum Gefäß 4 möglichst verringert wird. Die Durchgangsquerschnittsfläche von Verbindungsrohren 28, als welche die in den Zwischenabschnitten liegenden Kanäle dienen, und die Länge der Verbindungsrohre 28 werden so gewählt, daß eine maximale Reduzierung des hydraulischen Widerstandes gegen die Bewegung des fließenden Kältemittelstroms und ein minimaler Wärmezufluß aufgrund der in den Verbindungsrohren 28 vorhandenen Wärmeleitung von den Schirmen mit einer höheren Temperatur zu den Schirmen mit einer geringeren Temperatur gewährleistet werden. In Fig. 5,6, 7 ist die Fließrichtung des Kältemittelstroms durch einen Pfeil A angedeutet. Das Kältemittel wird während seiner Bewegung von einem Schirm zum anderen erwärmt, und wenn als Kältemittel beispielsweise die Dämpfe des flüssigen Heliums dienen, die im Gefäß 4 enthalten sind, so nimmt deren spezifisches Volumen um viele Male zu. Zur Optimierung der Kennwerte der Verbindungsrohre 28 sind sie mit einer Durchgangsquerschnittsfläche veränderlicher Größe ausgeführt, die proportional zum Ansteigen der Kältemitteltemperatur zunimmt. Beispielsweise werden die Dämpfe des flüssigen Helums-4, das bei atmosphärischem Druck zum Sieden kommt, von 4,2 K auf 300 K, d.h. um das 71,4 fache erwärmt, so daß die Durchgangsquerschnittsfläche der Verbindungsrohre 28 etwa um den Faktor 7 größer werden muß.

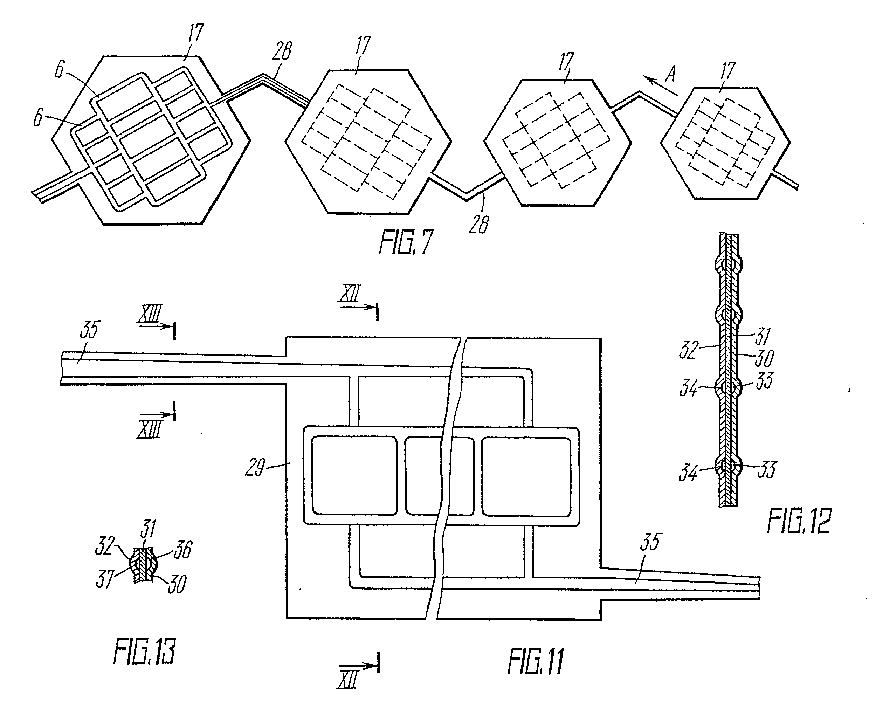

Das Ausschneiden der Abwicklung eines Paketes gekühlter Strahlungsschirme aus dem mehrlagigen Band 26 geschieht beispielsweise durch Plasma- bzw. Laserschneiden nach einem Programm, in dem eine Information über die Abwicklungsform enthalten ist. Dabei haben die Halbzeuge der Schirme 2 für einen zylinderförmigen Behälter, derin Fig. 1, 2 dargestellt ist, die Form von Rechtecken, wie dies in Fig. 6 veranschaulicht ist, bzw. von Parallelepipedons, wie dies in Fig. 5 gezeigt ist, während die Halbzeuge der Schirme 17 für einen Kugelförmigen Behälter, der in Fig. 3 dargestellt ist, die Form von Sechsecken besitzen, wie dies aus Fig. 7 ersichtlich ist. Die Verbindungsrohre 7 (Fig. 6) sind gerade bzw. zur Materialeinsparung zickzackförmig ausgebildet (Rohre 28 von Fig. 5, 7). Als Werkstoff für die Herstellung eines mehrgigen Bandes 26 verwendet man nichtrostenden Stahl, Aluminiumlegierungen, mit Folie beschichtete Kunststoffe und andere Materialien, die die Bearbeitung nach der vorbeschriebenen Technologie zulassen. Die Außenflächen des mehrlagigen Bandes 26 werden poliert bzw. mit einem lichtreflektierenden Film durch Bedampfen bedeckt. Danach erfolgt die Kontrolle der Dichtheit der Kanäle 6 mit einem Lecksucher. Die Kontrolle der Dichtheit in dieser Montagestufe ermöglicht eine qualitativ bessere Realisierung derselben als beim fertigmontierten Behälter.

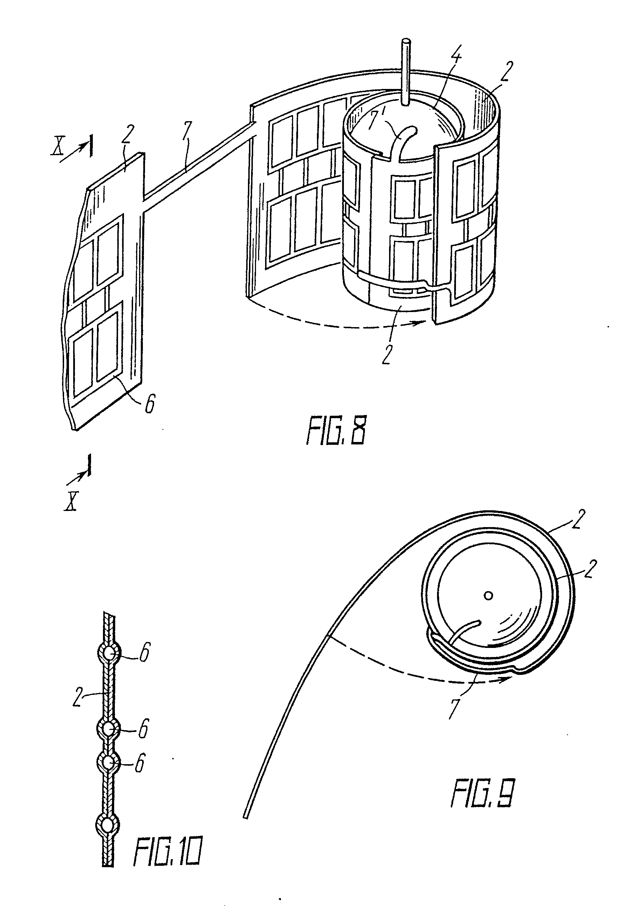

Die Technologie der weiteren Montage der wärmeisolierenden Einrichtung sei an einem Beispiel der Montage eines zylindrischen Behälters zum Speichern von kryogenen Flüssigkeiten erläutert, der in Fig. 1, 2 dargestellt ist. Zwei Ausführungsformen der Abwicklung von Schirmpaketen für das zylindrische Gefäß sind in Fig.5, 6 dargestellt. Als Beispiel sei die Technologie der Montage eines zylindrischen Behälters unter Benutzung einer in Fig. 6 abgebildeten Abwicklung betrachtet. Das Verbindungsrohr 7 (Fig. 8) des letzten Innenschirmes 2 wird an das Gefäß 4 hermetisch angeschweißt bzw. angelötet. Danach erteilt man dem ersten Schirm 2 z.B. auf einem Dorn eine zylindrische Form, wobei er koaxial mit dem Gefäß angeordnet wird und die vertikalen Ränder des Schirmes 2 durch Widerstandsschweißen bzw. eine Schraubenverbindung miteinander verbunden werden. Die letztere Verbindungsart ermöglicht es, die Einrichtung auseinandernehmbar zu machen, beispielsweise zur Durchführung einer Reparatur bzw. einer Auswechselung des Gefäßes 4. Der obere und untere Rand des Schirmes 2 werden nach einem Verfahren , der einen guten Wärmekontakt sicherstellt am oberen und unteren Boden 8 (Fig. 1) und 9 befestigt, die passive (nichtgekühlte) Strahlungsschirme darstellen. Der obere Boden 8 ist seinerseits am Einfüllhals 11, der untere Boden 9 aber an der Stütze 12 befestigt. Danach kann eine mehrlagige Wärmeisolation, beispielsweise eine Schirmvakuumisolation, auf den Schirm 2 aufgetragen werden. Die Anwendung einer mehrlagigen Wärmeisolation erhöht die Effektivität der wärmeisolierenden Einrichtung, erfordert allerdings ein längeres Abpumpen zur Vakuumierung des Innenraums des Behälters nach der Montage desselben. Daher ist die Anwendung einer mehrlagigen Wärmeisolation in den kryogenen Objekten begründet, die während des Betriebs nicht auseinandergenommen werden, beispielsweise in den zum Speichern von Flüssigkeiten bestimmten Behältern. Bei der Herstellung von Kryostaten, experimentellen kryogenen Geräten, die einer häufigen Demontage bedürfen, soll die Anwendung einer mehrlagigen Wärmeisolation lieber vermieden und dafür eine Vergrößerung der Zahl der gekühlten Strahlungsschirme 2 im Paket vorgesehen werden.

Danach findet die Montage eines nächsten gekühlten Strahlungsschirmes 2 durch Erteilung demselben einer zylindrischen Form und Verbindung seiner vertikalen Ränder statt. Der zweite Schirm 2 wird koaxial zum ersteren angeordnet. Dabei soll das Verbindungsrohr 7 zwischen dem ersten und zweiten gekühlten Strahlungsschirm 2 auf eine solche Weise verbogen werden, daß es im Zwischenraum zwischen den Schirmen 2 liegen, sie aber nicht berühren würde, wie dies in Fig. 9 gezeigt ist. Danach wird an den Schirm 2 der obere und untere Boden angeschlossen und bei Bedarf eine mehrlagige Wärmeisolation auf die bereits beschriebene Weise aufgetragen.

In ähnlicher Weise geschieht die Montage der weiteren Schirme 2, die sämtlich koaxial zueinander angeordnet werden. Nach der Montage des letzten Schirmes 2 wird das Gehäuse 3 (Fig. 1) zusammengebaut, wonach das Verbindungsrohr 13 des letzten Außenschirmes 2 an den Austrittsstutzen 14 angeschlossen wird. Nach der Kontrolle der Dichtheit wird der Raum zwischen der Außenwand des Gefäßes 4 und der Innenwand des Gehäuses 3 vakuumiert.

Der zum Speichern von kryogenen Flüssigkeiten bestimmte, mit der erfindungsgemäßen wärmeisolierenden Einrichtung ausgestattete Behälter arbeitet auf die folgende Weise.

Durch den Einfüllhals 11 (Fig. 1, 2) wird in das Gefäß 4 des Behälters flüssiges Kryomittel, beispielsweise flüssiges Helium, eingefüllt. Die während der Einfüllung und beim Speichern entstandenen Dämpfe treten aus dem Gefäß 4 über die Verbindungsrohre 7 und Kanäle 6, aus, die sich unmittelbar im Körper der Schirme 2 befinden, wobei sie die Schirme 2 abkühlen, die ihrerseits die Wärme von den oberen und unteren Böden 8 und 9 ableiten. Die letzteren verhindern die Wärmeausbreitung aufgrund der Wärmeleitung durch den Einfüllhals 11 und die Stütze 12. Während des Speicherns des Kryomittels soll der Einfüllhals 1 geschlossen bleiben.

Die Ausführung der Kanäle 6 unmittelbar im Körper der Schirme 2 gewährleistet einen direkten Wärmeaustausch zwischen dem in den Kanälen 6 fließenden Kältemittel und dem Werkstoff der Schirme 2, was den Wärmewiderstand zu senken und die Effektivität des von der wärmeisolierenden Einrichtung gewährleisteten Wärmeaustausches zu erhöhen erlaubt. Das Fehlen von Lötverbindungen zwischen den Kanälen 6, den Verbindungsrohren 7 und den Schirmen 2 gestattet es wiedernm, die Effektivität des Wärmeaustausches und die Zuverlässigkeit der Einrichtung zu erhöhen, die Herstellungstechnologie derselben zu vereinfachen. Die veränderliche Durchgangsquer schnittsfläche der Verbindungsrohre erlaubt es, den Wärmezufluß über dieselben zum Gefäß 4 zu verringern.

Das Verfahren der Montage der wärmeisolierenden Einrichtung des zum Speichern von Kryomitteln bestimmten Behälters gestattet es, eine Reihe von Operationen zu automatisieren.

Als Beispiel sei ferner eine wärmeisolierende Einrichtung sowie ein Verfahren zur Herstellung eines Kugelförmigen Behälters zum Speichern von kryogenen Flüssigkeiten betrachtet, der in Fig. 3, 4 mit einer solchen wärmeisolierenden Einrichtung dargestellt ist. In der wärmeisolierenden Einrichtung dieses Behälters ist eine Vielzahl der Pakete 16 von gekühlten Strahlungsschirmen 17 sechseckiger Form (die Abwicklung eines dieser Schirme ist in Fig. 7 zu sehen) sowie eine Vielzahl der Paketen 18 von passiven Schirmen vorhanden.

Die Montage des kugelförmigen Behälters mit der erfindungsgemäßen wärmeisolierenden Einrichtung geht auf die folgende Weise vor sich. Das kugelförmige Gefäß 20, das mit einem inneren Leitungsnetz 19 ausgestattet ist, welches mit dem oberen Teil des Innenraums des Gefäßes 20 durch einen Stutzen 21 verbunden ist, wird mit Hilfe der Verspannungen 25 am sphärischen Gehäuse 3 befestigt, das aus sechseckigen Sektionen zusammengebaut ist und sechseckige technologische Öffnungen zwischen den Sektionen aufweist. Zwischen dem Gefäß 20 und den Sektionen des Gehäuses 3 werden zunächst passive Strahlungsschirme 18 durch die im Gehäuse 3 vorhandenen technologischen Öffnungen eingesetzt. Die passiven Strahlungsschirme 18 haben eine sechseckige Form. Die Kanäle des Leitungsnetzes 19 verlaufen dabei am Rande dieser Öffnungen. An das Netz 19 wird das Verbindungsrohr 7 des letzten gekühlten Innenschirmes 17 angeschlossen, und nach der erfolgten Kontrolle der Dichtheit der erzeugten Verbindung wird der erste gekühlte Strahlungsschirm 17 mit einer an demselben (bei Bedarf) befestigten Matte der mehrlagigen Wärmeisolation angebracht. Der Schirm 17 wird im Zwischenraum zwischen den nichtgekühlten Schirmen 18 angeordnet und an den nichtgekühlten Schirmen 18 peripher mittels einer Verbindung befestigt, die einen guten Wärmekontakt gewährleistet. Der nächste gekühlte Strahlungsschirm 17 wird auf dieselbe Weise parallel zum ersten angeordnet, wobei man darauf achtgibt, daß sich das Verbindungsrohr 7 im Spalt zwischen den Schirmen 17 plaziert.

In ähnlicher Weise werden die nächstfolgenden gekühlten Schirme 17 angeordnet und wird so das gesamte Paket 16 hergestellt. Das Verbindungsrohr 7 des letzten Außenschirmes wird am äußeren Leitungshetz 22 hermetisch befestigt.

Danach wird die Öffnung mit einer Sektion 3 sechseckiger Form verdeckt. Die Verbindung der Sektionen des Gehäuses 3 geschieht mittels Schweißen.

Auf dieselbe Weise werden die Pakete 16 der gekühlten Strahlungsschirme in anderen Öffnungen zwischen den Paketen der nichtgekühlten Schirm 18 zusammengebaut. Die Zahl der Öffnungen und deren Form hängen von der erforderlichen Fläche der gekühlten Strahlungsschirme 17 und den konstruktiven Besonderheiten des Behälters ab. Das Einfüllen des Kryomittels 5 in den Behälter sowie die Entleerung des letzteren geschehen durch den Stutzen 24, der mit dem unteren Teil des Gefäßes 20 verbunden ist. Während des Speicherns des Kryomittels ist der Stutzen 24 abgesperrt. Das gasförmige Kältemittel - die Dämpfe des im Gefäß 20 siedenden Kryomittels 5 - wird durch den Stutzen 21 über das innere Leitungsnetz 19 in den Kanälen der Pakete 16 der gekühlten Strahlungsschirme 17 verteilt, in die es über die Verbindungsrohre 7 der letzten Innenschirme 17 gelangt. Das kalte gasförmige Kryomittel kühlt die Strahlungsschirme 17 ab, die ihrerseits die passiven Strahlungsschirme 18 abkühlen, wobei die Wärmezuflüsse mittels Strahlung und Wärmeleitung über die Verspannungen 25 verhindert werden. Danach gelangt das gasförmigeKryomittel in das äußere Leitungsnetz 22, das mit dem Außenstutzen 23 verbunden ist. Die beschriebene wärmeisolierende Einrichtung für das kugelförmige Gefäß mit Kryomittel, die eine Vielzahl der Pakete 16 von gekühlten Strahlungsschirmen 17 enthält, kennzeichnet sich durch eine hohe Wärmeaustauscheffektivität dank dem Fehlen von Lötverbindungen und unmittelbaren Kontakten zwischen den Wärmeaustauschkanälen und dem Werkstoff der Schirme 17 sowie durch eine einfache Herstellung.

Die wärmeisolierende Einrichtung und das Verfahren zur Herstellung eines Paketes von gekühlten Strahlungsschirmen für diese Einrichtung können auch bei der Herstellung von anderen kryogenen Ausrüstungen und Geräten wie beispielsweise Kryostaten, kryogenen Refrigeratoren, supraleitenden Elektromotoren, Generatoren, supraleitenden Kabeln, Speichern elektrischer Energie, supraleitenden Magneten u.a. angewendet werden.

So ist in Fig. 11, 12, 13 die Abwicklung eines Paketes gekühlten Strahlungschirmen 29 für die Wärmeisolierung des Niedertemperaturteiles eines Kryorefrigerators (in Fig. nicht mitabgebildet) dargestellt, welches gleichzeitig die Funktion einer Wärmeaustauscheinheit desselben Refrigerators erfüllt. In diesem Fall wird als Werkstoff des Schirmpaketes ein mehrlagiges Band verwendet, das drei Lagen 30, 31 und 32 enthält, wobei zwischen den Lagen 30 und 31 des Bandes Kanäle 33 für den direkten Strom des (im Verdichter komprimierten, vom Hoch- zum Niedertemperaturteil des Refrigerators aus geleiteten) Kältemittels, zwischen den Lagen 31 und 32 aber Kanäle 34 für den Kältemittel-Rückstrom erzeugt sind, der vom Niedertemperaturteil des Refrigerators aus in den Verdichter geleitet wird.

Die Verbindungsrohre 35 zwischen den Schirmen 29 sind aus demselben dreilagigen Band als ein Ganzes mit den Schirmen 29 ausgeführt. Jedes Verbindungsrohr 35 enthält zwei Kanäle 36 und 37, die sich zu beiden Seiten der Lage 31 der struktur befinden.

Die Kanäle 36 und 37 weisen einen veränderlichen Durchgangsquerschnitt auf, wobei der Durchgangsquerschnitt des Kanals 36 für den Kältemittelstrom mit der in der Flußrichtung des Kältemittels abnehmenden Temperatur ebenfalls kleiner wird, während der Durchgangsquerschnitt des Kanals 37 für den Kältemittels-Rückstrom in der Fließrichtung des Kältemittels zunimmt. Der Zusammenbau einer solchen Einrichtung erfolgt nach dem erfindungsgemäßen Herstellungsverfahren.

Die erfindungsgemäße Einrichtung ist dank dem unmittelbaren Kontakt des Kältemittels mit dem Werkstoff der Strahlungsschirme 29 durch eine hohe Effektivität gekennzeichnet und ermöglicht einen ausreichenden Wärmeschutz des Niedertemperaturteiles des Refrigerators neben einer hohen Effektivität des Wärmeaustausches zwischen dem direkten und rückläufigen Kältemittelstrom im Refrigerator, der über die Lage 31 der Struktur stattfindet.

Die Technologie des Zusammenbaues der erfindungsgemäßen Einrichtung gestattet es, Lötverbindungen auszuschließen, die Einrichtung technologisch einfach zu machen und eine Automatisierung dieses Prozesses zustandezubringen.

Gewerbliche Verwertbarkeit

Die wärmeisolierende Einrichtung und das Verfahren zur Herstellung eines Paketes von gekühlten Strahlungsschirmen für diese Einrichtung können bei der Herstellung der Wärmeisolation von kryogenen Objekten - Kryostaten, Dewargefäßen, Behältern zum Speichern solcher flüssigern Kryomittel wie flüssigem Helium, Wasserstoff, Stickstoff, Sauerstoff u.a. , kryogenen Transportbehältern, supraleitenden Wicklungen von Elektromotoren, Generatoren, Elektromagneten, Speichern elektrischer Energie, supraleitenden Kabeln angewendet werden.

Die vorliegende Erfindung wird zur Herstellung von Wärmeaustauscheinheiten von Helium, Wasserstoff-, Neon-, Stickstoff-, Sauerstoffrefrigeratoren, Luftzerlegern und anderen kryogenen Anlagen angewendet.

**Ansprüche**

1. Wärmeisolierende Einrichtung von kryogenen Objekten, die in Form mindestens eines Paketes von gekühlten Strahlungsschirmen (2) ausgeführt ist, die nacheinander im Ausbreitungswege der Wärmestrahlung zum kryogenen Objekt angeordnet sind, wobei jeder von ihnen mit zum Durchfließen des Kältemittels bestimmten kanälen (6) versehen ist, die von einem Schirm (2) zum anderen Schirm (2) mittels Verbindungsrohren (7) aufeinanderfolgend in Verbindung gesetzt sind, dadurch **gekennzeichnet**, daß jedes Paket von Srahlungsschirmen (2 ) aus einem einteiligen mehrlagigen Band ausgeführt ist, das jeweilige Hauptabschnitte gemäß der Anzahl der Schirme (2) im Paket mit einem innerhalb deren Fläche verzweigten Netz von durchgehenden Kanälen (6) zwischen den Bandlagen sowie zwischen den Hauptabschnitten liegende Zwischenabschnitte aufweist, die mindestens je einen Kanal besitzen, der die Funktion des Verbindungsrohres (7) erfüllt.

2. Wärmeisolierende Einrichtung nach Anspruch 1, dadurch **gekennzeichnet** daß die Verbindungsrohre (7) eine Durchgangsquerschnittsfläche veränderlicher Größe aufweisen, die proportional zum Ansteigen der Kältemitteltemperatur zunimmt.

3. Verfahren zur Herstellung eines Paketes von gekühlten Strahlungsschirmen für die wärmeisolierende Einrichtung von kryogenen Objekten, das darin besteht, daß man Halbzeuge von Paketschrimen (2) herstellt, die Schirme mit Wärmeaustauschkanälen (6) versieht, wobei sie aufeinanderfolgend von einem Halbzeug zum anderen mittels Verbindungsrohren (7) in Verbindung gesetzt werden, wonach man aus den erzeugten Schirmen (2) ein Paket formiert, indem die Schirme (2) einer nach dem anderen ungefähr parallel zueinander angeordnet und die Verbindungsrohre (7) in den Zwischenräumen zwischen den Schirmen (2) installiert werden, dadurch **gekennzeichnet**, daß man als Werkstoff für das Paket der Schirme (2) ein mehrlagiges Band (26) verwendet, zwischen dessen Lagen Kanäle (6) angeordnet sind, aus dem Band (26) die Abwicklung des gesamten Paketes ausschneidet, die gleichzeitig die Halbzeuge sämtlicher Schirme (2) mit den Kanälen (6) enthält, und danach aus der Abwicklung ein Paket formiert, wobei die Kanäle (6) im Band (26) innerhalb der Abwicklung auf der gesamten Fläche derselben gebildet werden.

FIG.1

FIG.2

FIG.3

FIG.4

FIG.5

FIG.6

FIG. 7

FIG. 11

FIG. 12

FIG. 13

EP 0 424 533 A1

FIG.8

FIG.9

FIG.10

# INTERNATIONAL SEARCH REPORT

International Application No  PCT/SU 89/00114

**I. CLASSIFICATION OF SUBJECT MATTER** (if several classification symbols apply, indicate all) [6]

According to International Patent Classification (IPC) or to both National Classification and IPC

Int. Cl. [5]  F 17 C 3/00, 13/00

**II. FIELDS SEARCHED**

| Minimum Documentation Searched [7] | |
|---|---|
| Classification System | Classification Symbols |

Int. Cl. [4]  F 17 C 3/0C - 3/08, 13/00, F 25 D 3/10, F 25 B 19/00

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | E.I. Mikulin "Kriogennaya tekhnika", 1969, Mashinostroenie (Moscow), pages 226-227 | 1,3 |
| A,E | FR,A1. 1569965, (R.T.C. LA RADIOTECHNIQUE - COMPELEC ), 6 June 1969 (06.06.69), the claims | 1-2 |
| A | SU, A1, 1180640 (Fiziko-tekhnichesky institut nizkikh temperatur AN USSR), 23 September 1985 (23.09.85), column 2, lines 31-58 (cited in the description) | 1,3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 20 November 1989 (20.11.89) | 18 January 1990 (18.01.90) |
| International Searching Authority | Signature of Authorized Officer |
| ISA/SU | |

Form PCT/ISA/210 (second sheet) (January 1985)